# EUROPÄISCHE PATENTSCHRIFT

(11) **EP 1 470 628 B1**
(45) Veröffentlichungstag und Bekanntmachung des Hinweises auf die Patenterteilung: **23.01.2013**
(21) Anmeldenummer: 02792597.3
(22) Anmeldetag: 13.11.2002
(51) Int. Cl.: H02J 7/34, B60R 21/01

(54) **SCHALTUNGSANORDNUNG ZUR KURZZEITIGEN AUFRECHTERHALTUNG WENIGSTENS EINER INTERNEN BETRIEBS-GLEICHSPANNUNG BEIM AUSFALL DER BORDNETZ-VERSORGUNGSSPANNUNG**
CIRCUIT ARRANGEMENT FOR MOMENTARILY MAINTAINING AN INTERNAL OPERATING DIRECT CURRENT VOLTAGE IN THE EVENT OF AN INTERRUPTION IN THE VEHICLE ELECTRICAL SYSTEM POWER SUPPLY VOLTAGE
CIRCUIT PERMETTANT LA CONSERVATION DE COURTE DUREE AU MOINS D'UNE TENSION CONTINUE INTERNE EN CAS DE PANNE DE LA TENSION D'ALIMENTATION DU TABLEAU DE BORD

(30) Priorität: 18.01.2002 DE 10201756
(43) Veröffentlichungstag der Anmeldung: 27.10.2004
(73) Patentinhaber: ROBERT BOSCH GMBH, 70442 Stuttgart (DE)
(72) Erfinder: SCHOU, Frank, 70565 Stuttgart (DE)
(86) Internationale Anmeldenummer: PCT/DE2002/004193
(87) Internationale Veröffentlichungsnummer: WO 2003/059681

(56) Entgegenhaltungen:
- DE-A1- 3 908 338
- US-A- 5 046 149
- US-A- 5 554 890

## Beschreibung

Die Erfindung geht aus von einer Schaltungsanordnung der im oberbegriff von Anspruch 1 genannten Art.

### Stand der Technik

Eine zunehmende Anzahl von Elektronikschaltungen im Kraftfahrzeugbereich muß auch nach dem Abschalten der Bordnetz-versorgungsspannung oder dem Abriß der Batterie (z. B. bei einem Unfall) noch für eine gewisse Zeit (Energiereservezeit) ihren vollen oder einen eingeschränkten Funktionsumfang erfüllen (Senden von Nachrichten an Telefonmodule für Notruf, auslösen von Airbags usw.).

Die dafür notwendige Energie wird in heutigen Steuergeräten typischerweise in einem Kondensator zwischengespeichert. Gemäß der Gleichung W = 1/2 C U² ist sie proportional zur Kapazität C des Kondensators und zum Quadrat der Spannung U. Um die Kapazität C des Kondensators möglichst klein zuhalten und um eine hohe Energiemenge speichern zu können, wird der Kondensator i. d. R. über einen Aufwärtsregler, der im allgemeinen als Schaltregler ausgebildet ist, auf eine Spannung aufgeladen, die höher als die Bordnetz-Versorgungsspannung ist.

Im Fall des Verlustes der Versorgungsspannung wird die Energie aus dem Energiereserve-Kondensator über einen (oder mehrere) Abwärtsregler entnommen, der (oder die) die erforderliche(n) interne(n) Betriebs-Gleichspannung(en) erzeugt (oder erzeugen).

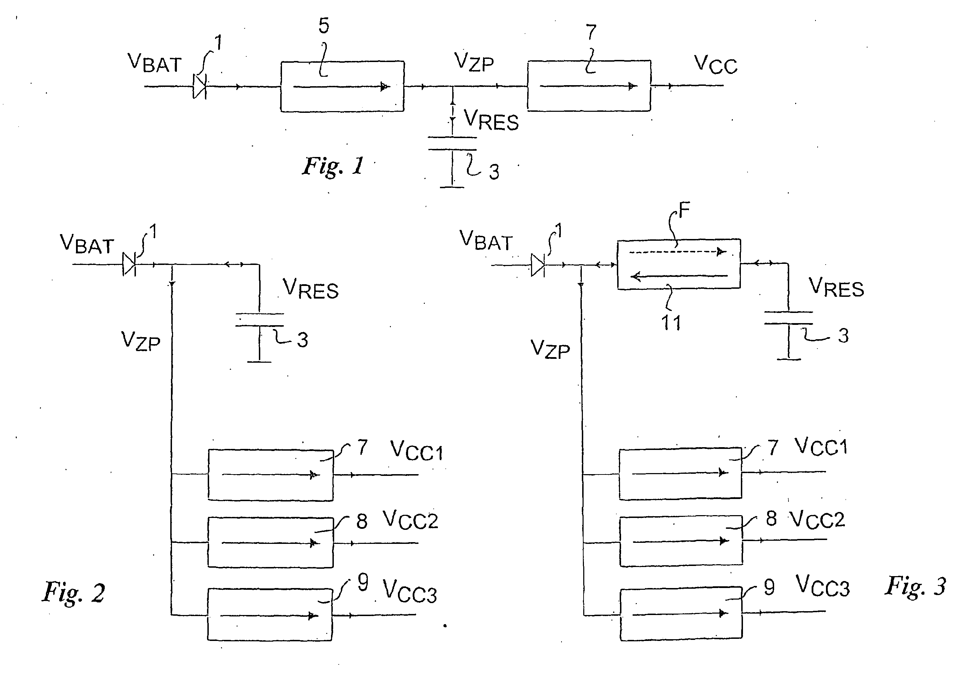

Dies wird im folgenden unter Bezugnahme auf die Figur 1 der Zeichnung genauer erläutert.

In Figur 1 ist eine aus dem Stand der Technik bekannte Schaltungsanordnung in stark schematisierter Weise wiedergegeben, der an ihrem links in der Figur befindlichen Spannungseingang über eine Verpolschutzdiode 1 die Bordnetz-Versorgungsspannung V_{BAT} eines Kraftfahrzeuges zugeführt wird und die an ihrem in der Figur rechts befindlichen Spannungsausgang für die Energieversorgung von nachgeordneten Elektronikschaltungen (nicht dargestellt) eine interne Betriebs-Gleichspannung V_{CC} abgibt, die im Regelfall niedriger als die Bordnetz-Versorgungsspannung V_{BAT} ist.

Um bei einem Ausfall der Bordnetz-Versorgungsspannung V_{BAT} die interne Betriebs-Gleichspannung V_{CC} zumindest kurzzeitig soweit aufrechterhalten zu können, daß wenigstens einige der nachgeordneten Elektronikschaltungen weiterhin einwandfrei arbeiten, umfaßt die bekannte Schaltungsanordnung einen als Kondensator 3 ausgebildeten Energiespeicher, der während des regulären Betriebs auf eine Spannung aufgeladen wird, die deutlich höher als die Bordnetz-Versorgungsspannung V_{BAT} ist, um den Kondensator 3 aus Kostengründen möglichst klein zu halten und dennoch in ihm möglichst viel Energie speichern und somit im Notfall einen möglichst langen Zeitraum überbrücken zu können. Um aus der Bordnetz-Versorgungsspannung V_{BAT} eine wesentlich höhere Ladespannung für den Kondensator 3 zu erzeugen, ist zwischen der Verpolschutzdiode 1 und dem Kondensator 3 ein Aufwärtsregler 5 angeordnet, dessen Ausgangsspannung im regulären Betrieb sowohl als Ladespannung für den Kondensator 3 als auch als Eingangs-Gleichspannung V_{ZP} für einen Abwärtsregler 7 dient, der aus ihr die eigentlich benötigte Betriebs-Gleichspannung V_{CC} erzeugt.

Im Notfall dient dieser Abwärtsregler 7 dazu, aus der vom Kondensator 3 gelieferten, zunächst hohen, dann aber kontinuierlich abnehmenden Reservespannung V_{RES} möglichst lange die Betriebs-Gleichspannung V_{CC} aufrecht zu erhalten.

Der Abwärtsregler 7 ist Teil einer Regelschleife, die einen (nicht dargestellten) Komparator, der die interne Betriebs-Gleichspannung V_{CC} mit einem vorgegebenen Sollwert vergleicht, und ein (nicht dargestelltes) Stellglied umfaßt, das ein in Abhängigkeit von der vom Komparator festgestellten Spannungsdifferenz variierendes Steuersignal an den Abwärtsregler 7 liefert.

Für derartige Abwärtsregler sind zwei grundsätzlich unterschiedliche Typen bekannt.

Zum einen kann hier ein Linearregler zum Einsatz kommen, der einen Längstransistor umfaßt, dessen Durchlaßspannung so verändert wird, daß sie gleich der erforderlichen Differenz zwischen der Eingangs-Gleichspannung V_{ZP} und der einzuregelnden internen Betriebs-Gleichspannung V_{CC} ist. Dieser Vorgang erfolgt sowohl im regulären Betrieb als auch während des Notbetriebes, bei dem dann die Eingangs-Gleichspannung V_{ZP} gleich der zunehmend kleiner werdenden, vom Kondensator 3 abgegebenen Reservespannung V_{RES} ist. Vorteilhaft an einem derartigen Linearregler ist sein einfacher Aufbau, doch besitzt er den Nachteil, daß er im Notbetrieb zumindest solange einem hohen Leistungsverlust verursacht, solange die Reservespannung V_{RES} wesentlich höher als die einzuregelnde interne Betriebs-Gleichspannung V_{CC} ist.

Alternativ läßt sich hier auch ein Schaltregler verwenden, dessen Längstransistor mit Hilfe von Ansteuerungsimpulsen alternierend völlig durchgesteuert beziehungsweise völlig gesperrt wird. Je nach Höhe der Eingangs-Gleichspannung V_{ZP} wird das Tastverhältnis der Ansteuerungsimpulse so variiert, daß sich an einem nachgeschalteten Glättungskondensator die erforderliche interne Betriebs-Gleichspannung V_{CC} ergibt. Dies ist insbesondere im Notbetrieb von Vorteil, weil die Leistungsverluste unabhängig von der Höhe der Eingangs-Gleichspannung Z_{ZP} = V_{RES} gering bleiben, doch wird dies mit einem wesentlich erhöhten schaltungstechnischen Aufwand erkauft.

Der beim Stand der Technik erforderliche Aufwärtsregler 5 bringt abgesehen vom schaltungstechnischen Aufwand und dem erhöhten Raumbedarf eine Reihe weiterer Nachteile mit sich. So erfordert er eine schlecht als integrierte Schaltung ausführbare Induktivität und erzeugt zusätzlich Verlustleistung, die den Wirkungsgrad der Anordnung verschlechtert und den Aufwand für die Abfuhr der erzeugten Wärme vergrößert. Auch verschlechtert er die EMV-Eigenschaften der Anordnung, da er ihre Abstrahlung vergrößert.

Aus der DE-A-3908338, das den nächstliegenden Stand der Tecknik zeigt, sind bereits ein Verfahren und eine Einrichtung zum Ansteuern einer Last, insbesondere in Kraftfahrzeugen, bekannt. Hierzu ist ein Drossel-Abwärtswandler vorgesehen, der einen ersten und einen zweiten Kondensator, eine Freilaufdiode, eine Drossel und eine erste Schalteinrichtung aufweist und der mit der Last elektrisch leitend verbunden ist. Um insbesondere die Leistungsverluste beim Inbetriebsetzen und Betreiben der Last möglichst gering zu halten und einen möglichst großen Leistungsregelbereich zur Verfügung zu stellen, ist vorgesehen, dass die Ansteuerung der ersten Schalteinrichtung in den leitenden Zustand mit dem Beginn jeder Pulsdauer für eine vorgegebene oder variable Zeitdauer niederohmig erfolgt, dass nach dem Ablauf dieser Zeitdauer die Ansteuerung der ersten Schalteinrichtung für die restliche Zeit der Pulsdauer hochohmig erfolgt und dass die erste Schalteinrichtung nach dem Ablauf der Pulsdauer in den gesperrten Zustand geschaltet wird.

### Vorteile der Erfindung

Die erfindungsgemäße Schaltungsanordnung mit den Merkmalen des Anspruchs 1 hat den Vorteil, daß bei einem "Hochvolt-Bordnetz" ein Aufwärtsregler völlig entfallen kann. Somit werden die mit ihm verbundenen Leistungsverluste vermieden und der Wirkungsgrad der Gesamtanordnung erheblich verbessert. Es wird weniger Wärme erzeugt, so daß der zu ihrer Abfuhr erforderliche Aufwand vermindert ist. Die Anordnung ist leicht integrierbar, da sie keine Induktivitäten enthält. Die Abstrahlung von Störsignalen ist vermindert. Durch die Reduzierung der Bauelemente wird eine kleinere Leiterplattenfläche benötigt und die Gesamtkosten werden reduziert.

Weitere Vorteile der Erfindung werden durch die in den Unteransprüchen angegebenen Maßnahmen erzielt.

### Zeichnung

Figur 1 zeigt eine bekannte Schaltungsanordnung zur kurzzeitigen Aufrechterhaltung wenigstens einer internen Betriebs-Gleichspannung für Elektronikschaltungen bei Ausfällen der Bordnetz-Versorgungsspannung eines Kraftfahrzeugs ein Ausführungsbeispiel der Erfindung ist in der Figur 3 dargestellt. Das Ausführungsbeispiel nach Figur 2 ist nicht Teil der Erfindung, sondern Stand der Technik, der dem Verständnis der Erfindung dient.

### Beschreibung

Bei den in der Figur 3 dargestellten erfindungsgemäßen Schaltungsanordnungen werden für Schaltungselemente, die in gleicher Weise auch bei der in Figur 1 gezeigten Anordnung vorhanden sind, die gleichen Bezugszeichen verwendet.

Jeder der beiden in den Figuren 2 und 3 ebenfalls stark schematisiert wiedergegebenen Schaltungsanordnungen wird über eine Verpolschutzdiode 1 eine Bordnetz-Versorgungsspannung V_{BAT} zugeführt, die jedoch von einem "Hochvolt-Bordnetz" stammt und beispielsweise 42 V beträgt. Diese Spannung liegt erfindungsgemäß direkt an dem als Energiespeicher dienenden Kondensator 3 an, da wegen ihrer Höhe eine Aufwärts-Transformation nicht erforderlich ist. Wie weiter unten genauer erläutert wird, ist dies auch bei dem in Figur 3 gezeigten Ausführungsbeispiel der Fall.

Weiterhin umfaßt jede der beiden in den Figuren 2 und 3 gezeigten Schaltungsanordnungen wenigstens einen Abwärtsregler 7, der aus seiner hohen Eingangs-Gleichspannung V_{ZP} (die im Notbetrieb gleich der vom Kondensator 3 gelieferten Reservespannung V_{RES} ist) die wenigstens eine interne Betriebs-Gleichspannung V_{CC1} erzeugt.

Bei besonders bevorzugten Ausführungsformen können zu diesem wenigstens einen Abwärtsregler 7 weitere Abwärtsregler 8, 9 usw. in der Weise parallel geschaltet sein, daß ihnen im Normalbetrieb die von der Verpolschutzdiode 1 gelieferte Spannung V_{ZP} und im Notbetrieb die vom Kondensator 3 gelieferte Reservespannung V_{RES} (beziehungsweise im Fall der Figur 3 eine hieraus abgeleitete Spannung) als Eingangs-Gleichspannung zugeführt wird, während sie an ihrem jeweiligen Ausgang eine weitere interne Betriebs-Gleichspannung V_{CC2}, V_{CC3} usw. abgeben, die jeweils einer gesonderten Gruppe von nachgeordneten Elektronikschaltungen zur Energieversorgung dient. Dabei können die einzelnen internen Betriebs-Gleichspannungen V_{CC1} bis V_{CC3} gleiche und/oder unterschiedliche Werte besitzen.

Auch hier ist jeder der gezeigten Abwärtsregler 7 bis 9 Teil einer Regelschleife, wie dies oben unter Bezugnahme auf Figur 1 bereits erläutert wurde.

Das Ausführungsbeispiel gemäß Figur 3 unterscheidet sich von dem aus Figur 2, bei welchem die vom Kondensator 3 abgegebene Reservespannung V_{RES} direkt an den oder die Abwärtsregler 7 bis 9 angelegt ist, dadurch, daß hier zusätzlich zu dem oder den Abwärtsreglern 7 bis 9 ein vorgeschalteter Abwärtsregler 11 vorgesehen ist, der sich zwischen dem Ausgang der Verpolschutzdiode 1 und dem Kondensator 3 befindet. Dieser vorgeschaltete Abwärtsregler 11 ist so ausgebildet, daß er im regulären Betrieb die von der Verpolschutzdiode 1 kommende Spannung unverändert, d. h. insbesondere ohne Hochtransformation an den Kondensator 3 legt, wie dies durch den gestrichelten Pfeil F angedeutet ist. Im Notbetrieb regelt dieser Abwärtsregler die vom Kondensator 3 abgegebene, fortschreitend absinkende Reservespannung V_{RES} dagegen soweit nach unten, daß die dem wenigstens einen Abwärtsregler 7 beziehungsweise den mehreren Abwärtsreglern 7 bis 9 zugeführte Eingangs-Gleichspannung V_{ZP} ständig nur geringfügig über der größten noch erzeugbaren Betriebs-Gleichspannung V_{CC1} bis V_{CC3} liegt.

Dies hat den großen Vorteil, daß nur der vorgeschaltete Abwärtsregler 11 als vergleichsweise aufwendiger Schaltregler ausgebildet werden muß, während der oder die nachgeordneten Abwärtsregler 7 bis 9 von einfachen und kostengünstigen Linearreglern gebildet werden können, an denen wegen der im Notfall durch den vorgeschalteten Abwärtsregler 11 bewirkten, geringen Spannungsdifferenzen zwischen ihren Ein- und Ausgängen keine großen Leistungsverluste entstehen, wodurch eine optimale Nutzung der im Kondensator 3 gespeicherten Reserveenergie möglich wird.

Im regulären Betrieb bleibt der vorgeschaltete Abwärtsregler 11 in Abwärtsrichtung völlig gesperrt und in Aufwärtsrichtung, d. h. von der Verpolschutzdiode 1 zum Kondensator 3 hin völlig geöffnet. Dies bietet den besonderen Vorteil, daß besonders hohe Ladungsmengen, die dem Kondensator 3 durch im Bordnetz auftretende Spannungsüberhöhungen zugeführt werden, zumindest solange erhalten bleiben, solange sich der Kondensator 3 nicht durch parasitäre Kriechströme auf den regulären Wert der von der Verpolschutzdiode 1 kommenden Spannung entladen hat. In den Fällen, in welchen sich ein Ausfall der Bordnetz-Versorgungsspannung V_{BAT} innerhalb eines kurzen Zeitabstandes nach dem Auftreten einer Spannungsüberhöhung ereignet, steht dann eine besonders hohe und lang anhaltende Energiereserve zur Verfügung.

### Bezugszeichenliste

- 1: Verpolschutzdiode
- 3: Energiespeicher
- 5: Aufwärtsregler
- 7: Abwärtsregler
- 8: Abwärtsregler
- 9: Abwärtsregler
- 11: vorgeschalteter Abwärtsregler
- V_{BAT}: Bordnetz-Versorgungsspannung
- V_{CC}: allgemeine interne Betriebs-Gleichspannung
- V_{CC1}: erste interne Betriebs-Gleichspannung
- V_{CC2}: zweite interne Betriebs-Gleichspannung
- V_{CC3}: dritte interne Betriebs-Gleichspannung
- V_{RES}: Reservespannung
- V_{ZP}: Eingangs-Gleichspannung

## Patentansprüche

1. Schaltungsanordnung, an welche eine von einem Hachvalt-Bordnetz eines Kraftfchrzeugs gelieferte Bordnetz-versorgungsspannung (V_{BAT}) angelegt ist und die zur kurzzeitigen Aufrechterhaltung wenigstens einer internen Betriebs-Gleichspannung (V_{CC1,...}) für Elektronikschaltungen bei Ausfällen der Bordnetz-Versorgungsspannung (V_{BAT}) folgende Bestandteile umfaßt:
einen Energie-Reservespeicher (3), an den im regulären, Betrieb eine Ladespannung die vom Hachvolt-Bornetz über eine Diode (1) geliefert wird, angelegt ist, die höher als die wenigstens eine interne Betriebs-Gleichspannung (V_{CC1,...}) ist, und der bei Ausfall der Bordnetz-Versorgungsspannung (V_{BAT}) eine Reservespannung (V_{RES}) angibt, mit deren Hilfe für einen begrenzten Zeitraum der Betrieb zumindest einiger Elektronikschaltungen aufrecht erhalten werden kann (Notbetrieb), und
wenigstens einen Abwärtsregler (7,...), der die an ihn angelegte Eingangs-Gleichspannung (V_{ZP}) auf die wenigstens eine interne Betriebs-Gleichspannung (V_{CC1,...}) herunter regelt,
**dadurch gekennzeichnet, daß** im regulären Betrieb die Versorgungs-Gleichspannung sowohl an den Energie-Reservespeicher (3) unmittelbar als Ladespannung als auch an den Abwärtsregler (7,...) als Eingangs-Gleichspannung (V_{ZP}) angelegt ist und daß die vom Energie-Reservespeicher (3) abgegebenen Reservespannung (V_{RES}) an einen vorgeschalteten Abwärtsregler (11) angelegt ist, der aus ihr die Eingangs-Gleichspannung (V_{ZP}) für den wenigstens einen Abwärtsregler (7,...) ableitet.

2. Schaltungsanordnung nach Anspruch 1, **dadurch gekennzeichnet, daß** der vorgeschaltete Abwärtsregler (11) ein Schaltregler, und der wenigstens eine Abwärtsregler (7,...), der die wenigstens eine interne Betriebsspannung (V_{CC1,....}) abgibt, ein Linearregler ist.

3. Schaltungsanordnung nach Anspruch 1, **dadurch gekennzeichnet, daß** sie zur Aufrechterhaltung mehrerer interner Betriebs-Gleichspannungen (V_{CC1}, V_{CC2}, V_{CC3},...) neben dem vorgeschalteten Abwärtsregler (11) mehrere Abwärtsregler (7, 8, 9) umfaßt, an die im regulären Betrieb die Versorgungs-Gleichspannung als Eingangs-Gleichspannung (V_{ZP}) angelegt ist, die jeder von ihnen auf jeweils eine der mehreren internen Betriebs-Gleichspannungen (V_{CC1}, V_{CC2}, V_{CC3},...) für jeweils eine Gruppe von Elektronikschaltungen
herunterregelt.

4. Schaltungsanordnung nach Anspruch 3, **dadurch gekennzeichnet, daß** die vom Energie-Reservespeicher (3) abgegebenen Reservespannung (V_{RES}) an den vorgeschalteten Abwärtsregler (11) angelegt ist, der aus ihr die Eingangs-Gleichspannung (V_{ZP}) für die mehreren Abwärtsregler (7, 8, 9) ableitet.

5. Schaltungsanordnung nach Anspruch 4, **dadurch gekennzeichnet, daß** der vorgeschaltete Abwärtsregler (11) ein Schaltregler ist und die mehreren Abwärtsregler (7, 8, 9), welche die mehreren internen Betriebs-Gleichspannungen (V_{CC1}, V_{CC2}, V_{CC3},...) abgeben, Linearregler sind.

6. Schaltungsanordnung nach einem der vorhergehenden Ansprüche, **dadurch gekennzeichnet, daß** der Energie-Reservespeicher (3) ein Kondensator ist.

## Claims

1. Circuit arrangement, to which an on-board power system supply voltage (V_{BAT}), which is supplied by a high-voltage on-board power system of a motor vehicle, is connected and which comprises the following components for briefly maintaining at least one internal operating direct current voltage (V_{CC1}, ...) for electronic circuits in the event of failures of the on-board power system supply voltage (V_{BAT}) :
an energy reserve storage means (3) to which during regular operation a charging voltage, which is supplied by the high-voltage on-board power system via a diode (1), is connected, which charging voltage is higher than the at least one internal operating direct current voltage (V_{CC1}, ...) and which, in the event of failure of the on-board power system supply voltage (V_{BAT}) outputs a reserve voltage (V_{RES}) which can be used to maintain the operation of at least some electronic circuits for a limited time period (emergency operating mode), and
at least one step-down regulator (7, ...) which steps down the input direct current voltage (V_{IP}) applied to it to the at least one internal operating direct current voltage (V_{CC1}, ...),
**characterized in that** during regular operation the power supply direct current voltage is applied both to the energy reserve storage means (3) directly as a charging voltage and to the step-down regulator (7, ...) as an input direct current voltage (V_{IP}), and **in that** the reserve voltage (V_{RES}) which is output by the energy reserve storage means (3) is applied to a step-down regulator (11) which is connected upstream and which derives from said reserve voltage (V_{RES}) the input direct current voltage (V_{IP}) for the at least one step-down regulator (7, ...).

2. Circuit arrangement according to Claim 1, **characterized in that** the step-down regulator (11) which is connected upstream is a switching regulator, and the at least one step-down regulator (7, ...) which outputs the at least one internal operating voltage (V_{CC1}, ...) is a linear regulator.

3. Circuit arrangement according to Claim 1, **characterized in that**, it comprises, for the purpose of maintaining a plurality of internal operating direct current voltages (V_{CC1}, V_{CC2}, V_{CC3}, ...), in addition to the step-down regulator (11) which is connected upstream, a plurality of step-down regulators (7, 8, 9) to which during regular operation the supply direct current voltage is applied as an input direct current voltage (V_{IP}), each of which step-down regulators (7, 8, 9) steps down to, in each case, one of the plurality of internal operating direct current voltages (V_{CC1}, V_{CC2}, V_{CC3}, ...) for, in each case, a group of electronic circuits.

4. Circuit arrangement according to Claim 3, **characterized in that** the reserve voltage (V_{RES}) which is output by the energy reserve storage means (3) is applied to the step-down regulator (11) which is connected upstream and which derives from said reserve voltage (V_{RES}) the input direct current voltage (V_{ZP}) for the plurality of step-down regulators (7, 8, 9).

5. Circuit arrangement according to Claim 4, **characterized in that** the step-down regulator (11) which is connected upstream is a switching regulator and the plurality of step-down regulators (7, 8, 9) which output the plurality of internal operating direct current voltages (V_{CC1}, V_{CC2}, V_{CC3}, ...) are linear regulators.

6. Circuit arrangement according to one of the preceding claims, **characterized in that** the energy reserve storage means (3) is a capacitor.

## Revendications

1. Arrangement de circuit auquel est appliquée une tension d'alimentation de réseau de bord (V_{BAT}) délivrée par un réseau de bord à haute tension d'un véhicule automobile et qui comprend les composants suivants pour maintenir pendant une courte durée au moins une tension continue de service (V_{CC1}, ...) interne pour des circuits électroniques en cas de pannes de la tension d'alimentation de réseau de bord (V_{BAT}) :
un accumulateur de réserve d'énergie (3) auquel est appliquée, en fonctionnement normal, une tension de charge qui es délivrée par le réseau de bord à haute tension par le biais d'une diode (1), laquelle est supérieure à l'au moins une tension continue de service (V_{CC1}, ...) interne et qui, en cas de panne de la tension d'alimentation de réseau de bord (V_{BAT}), délivre une tension de réserve (V_{RES}) à l'aide de laquelle le fonctionnement d'au moins quelques-uns des circuits électroniques peut être maintenu pendant une période limitée (fonctionnement de secours), et
au moins un régulateur abaisseur (7, ...) qui abaisse et régule la tension continue d'entrée (V_{ZP}) qui lui est appliquée à l'au moins une tension continue de service (V_{CC1}, ...) interne,
**caractérisé en ce qu'**en fonctionnement normal, la tension continue d'alimentation est appliquée à la fois directement à l'accumulateur de réserve d'énergie (3) en tant que tension de charge et au régulateur abaisseur (7, ...) en tant que tension continue d'entrée (V_{ZP}) et
**en ce que** la tension de réserve (V_{RES}) délivrée par l'accumulateur de réserve d'énergie (3) est appliquée à un régulateur abaisseur (11) branché en amont qui dérive à partir de celle-ci la tension continue d'entrée (V_{ZP}) pour l'au moins un régulateur abaisseur (7, ...).

2. Arrangement de circuit selon la revendication 1, **caractérisé en ce que** le régulateur abaisseur (11) branché en amont est un régulateur à découpage et l'au moins un régulateur abaisseur (7, ...), lequel délivre l'au moins une tension continue de service (V_{CC1}, ...) interne, est un régulateur linéaire.

3. Arrangement de circuit selon la revendication 1, **caractérisé en ce qu'**en vue de maintenir plusieurs tensions continues de service (V_{CC1}, V_{CC2}, V_{CC3}, ...) internes, il comprend, à côté du régulateur abaisseur (11) branché en amont, plusieurs régulateurs abaisseurs (7, 8, 9) auxquels est appliquée, en fonctionnement normal, la tension continue d'alimentation en tant que tension continue d'entrée (V_{ZP}), laquelle est abaissée et régulée par chacun d'entre eux à chaque fois à l'une des plusieurs tensions continues de service (V_{CC1}, V_{CC2}, V_{CC3}, ...) internes respectivement pour un groupe de circuits électroniques.

4. Arrangement de circuit selon la revendication 3, **caractérisé en ce que** la tension de réserve (V_{RES}) délivrée par l'accumulateur de réserve d'énergie (3) est appliquée au régulateur abaisseur (11) branché en amont, lequel dérive à partir de celle-ci la tension continue d'entrée (V_{ZP}) pour les plusieurs régulateurs abaisseurs (7, 8, 9).

5. Arrangement de circuit selon la revendication 4, **caractérisé en ce que** le régulateur abaisseur (11) branché en amont est un régulateur à découpage et les plusieurs régulateurs abaisseurs (7, 8, 9), lesquels délivrent les plusieurs tensions continues de service (V_{CC1}, V_{CC2}, V_{CC3}, ...) internes, sont des régulateurs linéaires.

6. Arrangement de circuit selon l'une des revendications précédentes, **caractérisé en ce que** l'accumulateur de réserve d'énergie (3) est un condensateur.
